# EUROPEAN PATENT SPECIFICATION

(11) **EP 0 405 019 B1**
(45) Date of publication and mention of the grant of the patent: **24.03.1993**
(21) Application number: 89306262.0
(22) Date of filing: 21.06.1989
(51) Int. Cl.: A23B 7/153, A23B 7/10

(54) **Brine for conserving cucumber**
Konservierungssole für Gurken
Saumure pour conservation de concombres

(43) Date of publication of application: 02.01.1991
(73) Proprietor: Sewon, Pentti Kullervo, SF-20310 Abo (FI)
(72) Inventor: Sewon, Pentti Kullervo, SF-20310 Abo (FI)
(74) Representative: Paget, Hugh Charles Edward

(56) References cited:
- EP-A- 0 312 899
- DE-A- 1 918 709
- FR-A- 1 299 448
- FR-A- 2 181 458
- GB-A- 1 581 339
- GB-A- 2 061 693
- GB-A- 2 107 168
- US-A- 3 849 579
- US-A- 4 352 827
- US-A- 4 844 929
- FOOD TECHNOLOGY, vol. 35, no. 1, January 1981, pages 84-88, Chicago, Illinois, US; H.P. FLEMING et al.: "Use of microbial cultures: vegetable products"

## Description

The present invention relates to cucumber conservation and especially a brine for conserving cucumber in bulk.

Cucumbers may be pickled and canned directly after harvest as so called "fresh packs" resulting in pickled cucumbers having a good taste and crispy consistency. The processing of cucumbers to produce fresh packs is also very uncomplicated including essentially only putting sorted and picked cucumbers into cans or jars, adding the pickling solution, closing the cans or jars, and finally heat treating the closed cans or jars to pasteurize their content. The drawback of this procedure is that it requires a very big processing capacity during the relatively short harvest period.

In order to overcome this drawback and enable processing huge quantities of cucumbers during an extended period with less personnel and processing equipment, part of the harvest is conventionally fermented and stored in bulk in large silos. From these silos cucumbers are withdrawn at a desired rate for processing in a conventional manner.

Without discussing in detail different known fermentation procedures one may in general contend that the pickled cucumbers processed from such fermented bulk products are not of the same high quality as those of fresh packed cucumbers. The controlling of the fermentation process to obtain an even quality is also difficult and the yield, taste and consistency of the pickled cucumbers are not so good as for fresh packs.

The problem addressed herein is to provide a method and means of conserving cucumbers in bulk, without the necessity of fermenting the cucumbers. The present invention replaces the previous known fermentation processes used for conserving cucumber in bulk before processing to pickled cucumbers in consumer packages. Preferably it seeks to provide pickled cucumbers of substantially the same high quality as by fresh packing but with the same personnel and capital investments as with the known fermentation processes used for storing the cucumbers in bulk awaiting processing for canning.

According to the present invention cucumbers are conserved in bulk by submerging the same in a brine containing in solution at least about 0.15 kg NaCl, 0.01-0.05 kg acetic or lactic acid or a non-toxic salt thereof, at least 1 g Na-benzoate, at least 1 g K-sorbate, at least 1 g CaCl₂, at least 50 mg ascorbic acid, and at least 50 mg citric acid per liter of said brine solution. When only the lower limit is given, it should be understood that the upper limit is set by the solubility of respective ingredient in the brine solution.

### Example

Assorted cucumbers of various size were washed and picked shortly after harvest. The cucumbers were then stored in silos for about 2 months immersed in about the same volume of an aqueous brine solution representing a preferred embodiment of the invention and containing per liter of said aqueous solution: 0.3 kg NaCl, 0.024 kg acetic acid, 3.5 g Na-benzoate, 3.5 g CaCl₂, 2.5 g K-sorbate, 400 mg ascorbic acid and 400 mg citric acid.

After this period the brine was withdrawn and the stored cucumbers were leached with water to reduce the level of the salt concentration brine therein below 2% by weight. Then the leached cucumbers were put into cans or jars together with a spiced pickling solution containing conventional pickling ingredients such as sweeteners, vinegar, salt and spices. Finally the cans or jars were hermetically closed and heated to pasteurize their contents.

It was observed that bigger cucumbers could be used than in the above fermentation processes and that the cucumbers so conserved and processed were crispy and of the same high quality as those obtained by fresh packing cucumbers although the cucumbers had been stored for an extended period in bulk before processing.

## Claims

1. Brine for conserving cucumber in bulk, comprising in solution per liter of the brine: at least 0.15 kg sodium chloride, 0.01-0.05 kg acetic or lactic acid or a non-toxic salt thereof, at least 1 g each of sodium benzoate, calcium chloride, and potassium sorbate, and at least 50 mg each of ascorbic acid and citric acid.

2. The brine of Claim 1, comprising per liter of aqueous solution:
0.3 kg sodium chloride
0.024 kg acetic acid
3.5 g sodium benzoate
3.5 g calcium chloride
2.5 g potassium sorbate
400 mg ascorbic acid
400 mg citric acid.

3. A method of non-fermentatively conserving cucumbers in bulk before pickling thereof comprising immersing the cucumbers in an aqueous brine according to claim 1 or claim 2.

4. A method of preparing an aqueous liquid for conserving cucumbers, characterised by dissolving at least 0.15 kg sodium chloride, 0.01-0.05 kg acetic or lactic acid or a non-toxic salt thereof, at least 1g each of sodium benzoate, calcium chloride and potassium sorbate, and at least 50 mg each of ascorbic acid and citric acid, in water, the amounts given being per litre of the resulting solution.

## Patentansprüche

1. Salzlösung zum Konservieren von Gurken in Masse, umfassend in Lösung pro Liter der Salzlösung: zumindest 0,15 kg Natriumchlorid, 0,01-0,05 kg Essig- oder Milchsäure oder ein nicht-toxisches Salz davon, zumindest jeweils 1 g Natriumbenzoat, Kalziumchlorid und Kaliumsorbat und zumindest jeweils 50 mg Ascorbinsäure und Zitronensäure.

2. Salzlösung nach Anspruch 1, die pro Liter wässeriger Lösung aufweist:
0,3 kg Natriumchlorid
0,024 kg Essigsäure
3,5 g Natriumbenzoat
3,5 g Kalziumchlorid
2,5 g Kaliumsorbat
400 mg Ascorbinsäure
400 mg Zitronensäure.

3. Verfahren zum Konservieren von Gurken (in Masse vor deren Einlegen) ohne Fermentierung, umfassend das Eintauchen der Gurken in eine wässerige Salzlösung nach Anspruch 1 oder 2.

4. Verfahren zum Herstellen einer wässerigen Flüssigkeit zum Konservieren von Gurken, gekennzeichnet durch das Auflösen von zumindest 0,15 kg Natriumchlorid, 0,01-0,05 kg Essig- oder Milchsäure oder eines nicht-toxischen Salzes davon, zumidnest jeweils 1 g Natriumbenzoat, Kalziumchlorid und Kaliumsorbat und zumindest jeweils 50 mg Ascorbinsäure und Zitronensäure in Wasser, wobei die Mengen pro Liter der resultierenden Lösung angegeben sind.

## Revendications

1. Saumure pour la conservation de concombres en vrac, comprenant, en solution par litre de la saumure : au moins 0,15 kg de chlorure de sodium, 0,01-0,05 kg d'acide acétique ou lactique ou un sel non toxique, au moins 1 g de chacun du benzoate de sodium, du chlorure de calcium et du sorbate de potassium et au moins 50 mg de chacun de l'acide ascorbique et de l'acide citrique.

2. Saumure de la revendication 1, comprenant par litre de solution aqueuse :
0,3 kg de chlorure de sodium
0,024 kg d'acide acétique
3,5 g de benzoate de sodium
3,5 g de chlorure de calcium
2,5 g de sorbate de potassium
400 mg d'acide ascorbique
400 mg d'acide citrique

3. Méthode de conservation sans fermentation des concombres en vrac avant de les saumurer, consistant à immerger les concombres dans une saumure aqueuse selon la revendication 1 ou la revendication 2.

4. Méthode de préparation d'un liquide aqueux pour conserver les concombres, caractérisée en ce qu'on dissout au moins 0,15 kg de chlorure de sodium, 0,01-0,05 kg d'acide acétique ou lactique ou leur sel non toxique, au moins 1 g de chacun du benzoate de sodium, du chlorure de calcium et du sorbate de potassium et au moins 50 mg de chacun de l'acide ascorbique et de l'acide citrique, dans l'eau, les quantités données étant par litre de la solution résultante.
